# EUROPÄISCHE PATENTSCHRIFT

(11) **EP 2 125 924 B1**
(45) Veröffentlichungstag und Bekanntmachung des Hinweises auf die Patenterteilung: **26.09.2012**
(21) Anmeldenummer: 07857452.2
(22) Anmeldetag: 12.12.2007
(51) Int. Cl.: C08G 18/32, C08G 18/67, H01B 3/30

(54) **Kabelummantelung aus thermoplastischen Polyurethan**
Cable sheating made from thermoplastic polyurethane
Revêtement de cãbles de polyurethane thermoplastique

(30) Priorität: 22.12.2006 EP 06127092
(43) Veröffentlichungstag der Anmeldung: 02.12.2009
(73) Patentinhaber: BASF SE, 67056 Ludwigshafen (DE)
(72) Erfinder: HENZE, Oliver Steffen, 49401 Damme (DE); STEINBERGER, Rolf, 49143 Bissendorf (DE); KRECH, Rüdiger, 49356 Diepholz (DE); DÜVEL, Nicole, 49401 Damme (DE)
(86) Internationale Anmeldenummer: PCT/EP2007/063789
(87) Internationale Veröffentlichungsnummer: WO 2008/077787

(56) Entgegenhaltungen:
- WO-A-2005/033205
- DE-A1- 19 512 310
- US-A- 3 243 414

## Beschreibung

Die Erfindung bezieht sich auf Kabelummantelungen auf der Basis von thermoplastischem Polyurethan basierend auf der Umsetzung von (a) Isocyanaten mit (b) Diolen, wobei das Diol (b) basiert auf geradkettigen oder bevorzugt verzweigten, bevorzugt aliphatischen, gesättigten oder ungesättigten, bevorzugt gesättigten Diolen (i) mit zwischen 16 und 45, bevorzugt zwischen 32 und 44, besonders bevorzugt 36 Kohlenstoffatomen in einem ununterbrochenen Kohlenstoffgerüst. Des weiteren betrifft die Erfindung Kabelummantelungen auf der Basis von thermoplastischem Polyurethan basierend auf der Umsetzung von (a) Isocyanaten mit (b) Diolen, wobei das Diol (b) basiert, d. h. enthält, auf Dimerdiol als Diol (i). Als Dimerdiol werden in dieser Schrift auch Diole auf der Basis von Dimerfettsäuren verstanden. Außerdem bezieht sich die vorliegende Erfindung auf Verfahren zur Ummantelung von Kabeln, insbesondere stromführenden Kabeln durch Extrusion von thermoplastischem Polyurethan, wobei man das erfindungsgemäße thermoplastische Polyurethan einsetzt.

Der Einsatz von thermoplastischem Polyurethan, im Folgenden auch als TPU bezeichnet, als Material zur Ummantelung von Kabeln ist allgemein bekannt. Für dieses Einsatzgebiet qualifizieren sich TPU durch ihre ausgezeichneten mechanischen Eigenschaften, insbesondere ihrer hervorragenden Abriebbeständigkeit und der hohen Elastizität des Materials.

Eine besondere Anforderung für Kabelummantelungen besteht darin, dass das Material einen möglichst hohen elektrischen Durchgangswiderstand aufweisen soll. Aus diesem Grunde werden elektrische Leitungen häufig zunächst mit PVC, EVA oder PE ummantelt und erst dann mit dem hochabriebbeständigen TPU-Mantel versehen. Diese zweifache Ummantelung bedeuten einen signifikanten Mehraufwand im Vergleich zu einem einfachen Mantelaufbau und es wäre somit wünschenswert, ein Material zu entwickeln, das sowohl hinsichtlich der mechanischen Eigenschaften als auch bezüglich eines ausreichenden elektrischen Isolationswiderstandes optimiert ist.

Die Aufgabe der vorliegenden Erfindung bestand darin, eine Kabelummantelung zu entwickeln, die hervorragende mechanische Eigenschaften ausweist, insbesondere einen sehr geringen Abrieb bei gleichzeitig sehr guter Elastizität, aber zudem auch einen ausreichend hohen elektrischen Isolationswiderstand aufweist. Insbesondere sollte das Material die Anforderungen führender Automobilhersteller erfüllen, insbesondere die harmonisierte Norm LV 112 bezüglich des elektrischen Isolationswiderstandes.

Diese Aufgaben konnten durch die eingangs dargestellte Kabelummantelung, insbesondere für elektrische Leitungen auf Basis von Kupfer, insbesondere unbehandeltes Kupfer, verzinntes Kupfer, versilbertes Kupfer und/oder Aluminium gelöst werden.

Die erfindungsgemäße Kabelummantelung auf Basis TPU zeichnet sich dadurch aus, dass durch den Einsatz der hydrophoben Diole (i) als Diolkomponente zur Umsetzung mit dem Isocyanat (a) das ausgezeichnete mechanische Eigenschaftsprofil von TPU kombiniert werden konnte mit einem optimierten, d. h. hohen elektrischen Durchgangswiderstand. Die erfindungsgemäßen Kabel weisen zudem den Vorteil auf, dass gerade beim Einsatz als Flachleiterkabeln Winkel, wie sie bei der Verlegung der Kabel um Ecken herum auftreten, aufgrund des zugrundeliegenden thermoplastischen Materials sehr leicht durch kurzes Erwärmen und Verkleben oder Verschweißen fixiert werden können.

Die erfindungsgemäßen Diole (i) sind allgemein bekannt, z. B. aus DE-A 195 13 164 und DE-A 43 08 100, Seite 2, Zeile 5 bis Zeile 43, kommerziell erhältlich, z. B. als Dimerdiol sowie als Ester basierend auf Dimerfettsäure. Auch die Herstellung von Polyurethanen und auch thermoplastischen Polyurethanen ist beschrieben, siehe auch Fett/Lipid 101 (1999), Nr. 11, S 418 - 424, DE-A 44 20 310 und DE-A 195 12 310. Dieser Stand der Technik gibt dem Fachmann aber keinen Anhaltspunkt, entsprechende Diole zur Erhöhung des elektrischen Durchgangswiderstandes in Kabelummantelungen einzusetzen.

Als Diol (i), somit als Diol (b) kann bevorzugt allgemein bekanntes Dimerdiol eingesetzt werden, das bevorzugt das Umsetzungsprodukt der Dimerisierung von ungesättigten Fettalkoholen und/oder das Produkt der Hydrierung von dimeren Fettsäuren und/oder deren Fettsäureestern ist. Entsprechende Produkte werden in der DE 43 08 100 A1, Seite 2, Zeile 5 bis Zeile 43 beschrieben, ihre Herstellung ist zudem in DE 11 98 348, DE 17 68 313 und WO 91/13918 dargestellt, die auch in der DE 43 08 100 zitiert sind.

Bevorzugt weist dabei das Dimerdiol zwischen 16 und 45, bevorzugt zwischen 32 und 44, besonders bevorzugt 36 Kohlenstoffatome auf. Basiert das Dimerdiol auf Fettalkohol, so weist dieser bevorzugt zwischen 16 und 45, bevorzugt zwischen 32 und 44, besonders bevorzugt 36 Kohlenstoffatome auf. Basiert das Dimerdiol auf einer dimeren Fettsäure, so weist diese bevorzugt zwischen 16 und 45, bevorzugt zwischen 32 und 44, besonders bevorzugt 36 Kohlenstoffatome auf. Als Fettsäuren oder Fettsäureester werden bevorzugt Ölsäure, Linolsäure, Linolensäure, Palmitoleinsäure, Elaidinsäure und/oder Erucasäure und/oder deren Ester eingesetzt (siehe DE 43 08 100). Als ungesättigte Fettalkohole zur Herstellung der Dimerdiole eignen sich bevorzugt Palmitoleyl-, Oleyl-, Elaidyl-, Linolyl-, Linolenyl- und/oder Erucylalkohol. Alternativ kann als Dimerdiol das Umsetzungsprodukt von dimeren Fettsäuren mit Adipinsäure sowie Diol ausgewählt aus Butan-1,4-diol, Hexan-1,6-diol und/oder Polyethylenglycol eingesetzt werden.

Zur Umsetzung mit dem Isocyanat kann das Diol (i) direkt eingesetzt werden, d. h. das thermoplastische Polyurethan basiert auf der Umsetzung von Isocyanat mit Diol (i) als Diol (b). Alternativ kann anstatt oder zusammen mit dem Diol (i) ein Umsetzungsprodukt (ii) des Diols (i) zur Umsetzung mit dem Isocyanat (a) eingesetzt werden. Bevorzugt handelt es sich bei dem Umsetzungprodukt (ii) um das Umsetzungsprodukt (ii) des Diols (i) mit Caprolacton oder Ethylenoxid, besonders bevorzugt Caprolacton. Das Umsetzungsprodukt (ii) weist dabei bevorzugt ein Molekulargewicht zwischen 800 und 3000 g/mol auf.

Der Gewichtsanteil des Diols (i) an dem Gesamtgewicht des thermoplastischen Polyurethans beträgt bevorzugt zwischen 2 und 25 Gew.-%.

Zusätzlich zum Diol (i) können weitere, allgemein bekannte Diole eingesetzt werden. Bevorzugt basieren die erfindungsgemäßen TPU auf der Umsetzung von (a) Isocyanat mit einer gegenüber Isocyanaten reaktiven Komponente enthaltend Polytetrahydrofuran mit einem Molekulargewicht zwischen 600 und 3000 g/mol und/oder Esterdiol mit einem Molekulargewicht zwischen 600 und 3000 g/mol auf Basis Adipinsäure sowie dem Diol (i) und/oder dem Umsetzungsprodukt (ii) als Diol (b). Dies bedeutet, dass neben dem erfindungsgemäßen Diol (i) weitere Diole, die an späterer Stelle als Komponente (b) dargestellt werden, eingesetzt werden können, bevorzugt Polytetrahydrofuran, besonders bevorzugt mit einem Molekulargewicht von zwischen 600 und 3000 g/mol und/oder das oben genannte Esterdiol, d. h. der Ester auf Basis Adipinsäure, der zwei Hydroxylgruppen ausweist.

Das thermoplastische Polyurethan weist bevorzugt eine Shore-Härte zwischen 70 A und 80 D, bevorzugt zwischen 95 A und 70 D auf.

Bevorzugt ist zudem die Verwendung von Emulgatoren zur Verträglichkeitsvermittlung zwischen den unpolaren Diolen (i), insbesondere den Fettsäurederivaten und den weiteren polaren Komponenten zur Herstellung der TPU. Bevorzugt enthält das thermoplastische Polyurethan somit Emulgatoren.

Die erfindungsgemäßen Diole (i) sind erfindungsgemäß als solches oder als Umsetzungsprodukt (ii) Bestandteil der Diolkomponente (b) (Diol (b)), die mit Isocyanat zum TPU umgesetzt wird.

Die erfindungsgemäße Kabelummantelung, die bevorzugt ein elektrisches Kabel auf der Basis von Kupfer, insbesondere unbehandeltes Kupfer, verzinntes Kupfer, versilbertes Kupfer oder Aluminiumummantelt, weist den allgemein bekannten Aufbau auf. Dabei beträgt die Dicke der Kabelummantelung auf Basis TPU bevorzugt zwischen 0,01 mm und 2 mm.

Das thermoplastische Polyurethan der erfindungsgemäßen Kabelummantelungen weist bevorzugt nach 240 Stunden Lagerung in 1 %-iger wässriger NaCl Lösung einen spezifischen Durchgangswiderstand nach DIN IEC 60093 von mindestens 1*10⁺¹³ Ωcm auf. Bevorzugt ist ferner, dass das thermoplastische Polyurethan der erfindungsgemäßen Kabelummantelungen im trockenen Zustand einen spezifischen Durchgangswiderstand nach DIN IEC 60093 von mindestens 1*10⁺¹⁴ Ωcm aufweist.

Gegenstand der vorliegenden Erfindung ist auch ein Verfahren zur Ummantelung von Kabeln, insbesondere stromführenden Kabeln durch Extrusion von thermoplastischem Polyurethan, wobei man das erfindungsgemäße thermoplastisches Polyurethan einsetzt.

Bevorzugt wird mit dem Diol (i) und/oder dem Umsetzungsprodukt (ii) ein TPU nach allgemein bekannten Verfahren hergestellt, das anschließend mittels üblicher Techniken und Apparaturen, z. B. durch Extrusion zur Kabelummantelung verarbeitet wird. Die Herstellung von Kabelummantelungen ist allgemein bekannt und z. B. beschrieben in
- Plastics Extrusion Technology von Friedhelm Hensen, 2. Auflage, erschienen 1997 im Hanser Fachbuchverlag (ISBN 3-446-18490-2.);
- Polymer Extrusion von Chris Rauwendaal, 4. vollst. überarbeitete Auflage, erschienen 2006 im Hanser Fachbuchverlag (ISBN 3-446-21774-6);
- Extrusion: The Definitive Processing Guide and Handbook von Giles, Harold Giles, John Wagner, erschienen 2004 bei Noyes Pubn (ISBN 0-8155-1473-5);
- Handbuch der Kunststoff - Extrusionstechnik, Band 1, Grundlagen von Friedhelm Hensen, Werner Knappe, Helmut Potente, erschienen 1989 im Hanser Fachbuchverlag.

Bevorzugt stellt man das thermoplastische Polyurethan im one-shot-Verfahren her und verarbeitet dieses TPU anschließend zur Kabelummantelung. Gegenstand der vorliegenden Erfindung sind deshalb auch Verfahren zur Herstellung von dem erfindungsgemäßen thermoplastischen Polyurethan durch Umsetzung von (a) Isocyanaten mit (b) Diolen, wobei man das thermoplastische Polyurethan im one-shot-Verfahren herstellt.

Verfahren zur Herstellung von TPU sind allgemein bekannt. Beispielsweise können die thermoplastischen Polyurethane durch Umsetzung von (a) Isocyanaten mit (b) Diolen, im allgemeinen gegenüber Isocyanaten reaktiven Verbindungen mit einem Molekulargewicht von 500 bis 10000 und gegebenenfalls Kettenverlängerungsmitteln mit einem Molekulargewicht von 50 bis 499 gegebenenfalls in Gegenwart von (d) Katalysatoren und/oder (e) üblichen Hilfsstoffen herstellt werden.

Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b) sowie gegebenenfalls (d) und/oder (e) sollen im Folgenden beispielhaft beschrieben werden:
a) Als organische Isocyanate (a) können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat und/oder IPDI, insbesondere 4,4'- MDI.
b) Als gegenüber Isocyanaten reaktive Verbindungen (b) können neben den erfindungsgemäßen Diolen und/oder den Umsetzungprodukten (ii) allgemein bekannten gegenüber Isocyanaten reaktive Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000, insbesondere 800 bis 4000, und bevorzugt einer mittleren Funktionalität von 1,8 bis 2,3, bevorzugt 1,9 bis 2,2, insbesondere 2. Außerdem können Kettenverlängerungsmittel zum Einsatz kommen, z. B. allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponente (b) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.
e) Neben Katalysatoren (d) können den Aufbaukomponenten (a) und (b) auch übliche Hilfsmittel (e) hinzugefügt werden. Genannt seien beispielsweise oberflachenaktive Substanzen, Flammschutzmittel, Keimbildungsmittel, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet. Um die erfindungsgemäßen TPU gegen Alterung zu stabilisieren, werden dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98 bis136. Ist das erfindungsgemäße TPU während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98 bis 107 und S. 116 bis 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl)propionate) (Irganox^{®} 1010). Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU. Bevorzugt werden die TPU zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, S. 116 bis 122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin^{®} 213, Tinuvin^{®} 328, Tinuvin^{®} 571 sowie Tinuvin^{®} 384 und das Eversorb^{®} 82. Bevorzugt werden die UV-Absorber in Mengen zwischen 0,01 und 5 Gew.-%, bezogen auf die Gesamtmasse TPU zudosiert, besonders bevorzugt zwischen 0,1 und 2,0 Gew.-%, insbesondere zwischen 0,2 und 0,5 Gew.-%, jeweils bezogen auf das Gesamtgewicht des TPU. Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponente (e) bevorzugt zusätzlich zu dem Antioxidans und dem UV-Absorber, noch ein Hindered-Amine Light Stabilizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123 bis 136. Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen bevorzugt nicht größer als 10000 g/mol, besonders bevorzugt nicht größer als 5000 g/mol sein. Besonders bevorzugte Hindered Amine Light Stabilizer sind bis-(1,2,2,6,6-pentamethylpiperidyl) sebacat (Tinuvin^{®} 765, Ciba Spezialitätenchemie AG) und das Kondensationsprodukt aus 1-hydroxyethyl-2,2,6,6-tetramethyl-4-hydroxypiperidine and succinic acid (Tinuvin^{®} 622). Insbesondere bevorzugt ist das Kondensationsprodukt aus 1-hydroxyethyl-2,2,6,6-tetramethyl-4-hydroxypiperidine and succinic acid (Tinuvin^{®} 622), wenn der Titangehalt des Produktes < 150 ppm, bevorzugt < 50 ppm insbesondere bevorzugt < 10 ppm ist. HALS-Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das Gesamtgewicht des TPU. Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf.

Zur Einstellung von Härte der TPU können die Aufbaukomponenten höhermolekulareDiole und die Kettenverlängerungsmittel in relativ breiten molaren Verhältnissen variiert werden. Bewährt haben sich molare Verhältnisse von höhermolekularem Diol zu insge-samt einzusetzenden Kettenverlängerungsmitteln von 10 : 1 bis 1 : 10, insbesondere von 1 : 1 bis 1 : 4, wobei die Härte der TPU mit zunehmendem Gehalt an Kettenverlängerer ansteigt.

Die Umsetzung kann bei üblichen Kennzahlen erfolgen, bevorzugt bei einer Kennzahl zwischen 950 und 1050, besonders bevorzugt bei einer Kennzahl zwischen 970 und 1010, insbesondere zwischen 980 und 995. Die Kennzahl ist definiert durch das molare Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponente (b). Bei einer Kennzahl von 1000 kommt auf eine Isocyanatgruppe der Komponente (a) ein aktives Wasserstoffatom, d. h. eine gegenüber Isocyanaten reaktive Funktion der Komponente (b). Bei Kennzahlen über 1000 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren oder diskontinuierlich nach dem bekannten Prepolymerprozeß erfolgen. Bei diesen Verfahren können die zur Reaktion kommenden Komponenten (a), (b) und gegebenenfalls (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (d) und/oder (e) einzeln oder als Gemisch in den Extruder eingeführt, z. B. bei Temperaturen von 100 bis 280 °C, vorzugsweise 140 bis 250 °C zur Reaktion gebracht, das erhaltene TPU wird extrudiert, abgekühlt und granuliert.

Bevorzugt sind zudem TPU gemäß der WO 03/014179, wobei entsprechend der vorliegenden Erfindung das Diol (i) und/oder das Umsetzungsprodukt (ii) als gegenüber Isocyanaten reaktive Verbindung (b) eingesetzt wird, bevorzugt zusammen mit weiteren Verbindungen (b), die in der WO 03/014179 genannt sind. Die nachfolgenden Ausführungen bis zu den Beispielen beziehen sich auf diese besonders bevorzugten TPU. Diese besonders bevorzugten TPU sind bevorzugt erhältlich durch Umsetzung von (a) Isocyanaten mit dem erfindungsgemäßen Diol (i) und/oder dem Umsetzungsprodukt (ii), (b1) Polyesterdiolen mit einem Schmelzpunkt größer 150 °C, (b2) Polyetherdiolen und/oder Polyesterdiolen jeweils mit einem Schmelzpunkt kleiner 150°C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt.

Unter dem Ausdruck "Schmelzpunkt" ist in dieser Schrift das Maximum des Schmelzpeaks einer Aufheizkurve zu verstehen, die mit einem handelsüblichen DSC-Gerät (z. B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man einen, bevorzugt hochmolekularen, bevorzugt teilkristallinen, thermoplastischen Polyester mit einem Diol (c) umsetzt und anschließend das Umsetzungsprodukt aus diesem Schritt (x) enthaltend (b1) Polyesterdiol mit einem Schmelzpunkt größer 150°C sowie gegebenenfalls (c) Diol zusammen mit (b2) Polyetherdiolen und/oder Polyesterdiolen jeweils mit einem Schmelzpunkt kleiner 150°C und einem Molekulargewicht von 501 bis 8000 g/mol sowie dem erfindungsgemäßen Diol (i) und/oder dem Umsetzungsprodukt (ii) gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der zweiten Umsetzung das Molverhältnis von den Diolen (c) mit einem Molekulargewicht von 62 bis 500 g/mol zu der Komponente (b2) kleiner 0,2, bevorzugt 0,1 bis 0,01.

Während durch den ersten Schritt (x) die Hartphasen durch den im Schritt (x) eingesetzten Polyester für das Endprodukt zur Verfügung gestellt werden, erfolgt durch den Einsatz der Komponente (b2) im Schritt (xx) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden Polyesterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d. h. vor der Umsetzung (x) mit dem Diol (c), bevorzugt ein Molekulargewicht von 15000 g/mol bis 40000 g/mol sowie bevorzugt einen Schmelzpunkt von größer 160°C, besonders bevorzugt von 170°C bis 260°C auf.

Als Ausgangsprodukt, d. h. als Polyester, der in dem Schritt (x) bevorzugt in geschmolzenem Zustand besonders bevorzugt bei einer Temperatur von 230°C bis 280°C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich

Den thermoplastischen Polyester schmilzt man bevorzugt bei einer Temperatur von 180°C bis 270°C auf. Die Umsetzung (x) mit dem Diol (c) führt man bevorzugt bei einer Temperatur von 230 °C bis 280°C, bevorzugt 240°C bis 280°C durch.

Als Diol (c) können in dem Schritt (x) zur Umsetzung mit dem thermoplastischen Polyester und gegebenenfalls im Schritt (xx) allgemein bekannte Diole mit einem Molekulargewicht von 62 bis 500 g/mol eingesetzt werden, beispielsweise die an späterer Stelle genannten, z. B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (x) beträgt üblicherweise 100 : 1,0 bis 100 : 10, bevorzugt 100 : 1,5 bis 100 : 8,0.

Die Umsetzung des thermoplastischen Polyesters mit dem Diol (c) in dem Umsetzungsschritt (x) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (x) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (x) in Frage: Tetrabutylorthotitanat und/oder Zinn-(II)-Dioctoat, bevorzugt Zinn-dioctoat.

Das Polyesterdiol (b1) als Umsetzungsprodukt aus (x) weist bevorzugt ein Molekulargewicht von 1000 bis 5000 g/mol auf. Der Schmelzpunkt des Polyesterdiols als Umsetzungsprodukt aus (x) beträgt bevorzugt 150°C bis 260°C, insbesondere 165°C bis 245°C, d. h. dass das Umsetzungsprodukt des thermoplastischen Polyesters mit dem Diol (c) im Schritt (x) Verbindungen mit dem genannten Schmelzpunkt enthält, die in dem anschließenden Schritt (xx) eingesetzt werden.

Durch die Umsetzung des thermoplastischen Polyesters mit dem Diol (c) in dem Schritt (x) wird die Polymerkette des Polyesters durch das Diol (c) durch Umesterung gespalten. Das Umsetzungsprodukt des TPU weist deshalb freie Hydroxylendgruppen auf und wird bevorzugt in dem weiteren Schritt (xx) zu dem eigentlichen Produkt, dem TPU, weiterverarbeitet.

Die Umsetzung des Reaktionsproduktes aus dem Schritt (x) in dem Schritt (xx) erfolgt bevorzugt durch Zugabe von a) Isocyanat (a) sowie (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (x). Die Umsetzung von dem Reaktionsprodukt mit dem Isocyanat erfolgt über die in dem Schritt (x) entstandenen Hydroxylendgruppen. Die Umsetzung in dem Schritt (xx) erfolgt bevorzugt bei einer Temperatur von 190°C bis 250°C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (x) durchgeführt wurde. Beispielsweise kann die Umsetzung des Schrittes (x) in den ersten Gehäusen eines üblichen Reaktionsextruders erfolgen und an späterer Stelle, d. h. späteren Gehäusen, nach der Zugabe der Komponenten (a) und (b2), die entsprechende Umsetzung des Schrittes (xx) durchgeführt werden. Beispielsweise können die ersten 30 bis 50 % der Länge des Reaktionsextruders für den Schritt (x) verwendet und die restlichen 50 bis 70 % für den Schritt (xx) eingesetzt werden.

Die Umsetzung in dem Schritt (xx) erfolgt bevorzugt bei einem Überschuss der Isocyanatgruppen zu den gegenüber Isocyanaten reaktiven Gruppen. Bevorzugt beträgt in der Umsetzung (xx) das Verhältnis der Isocyanatgruppen zu den Hydroxylgruppen 1 : 1 bis 1,2 : 1, besonders bevorzugt 1,02 : 1 bis 1,2 : 1.

Bevorzugt führt man die Umsetzungen (x) und (xx) in einem allgemein bekannten Reaktionsextruder durch. Derartige Reaktionsextruder sind beispielhaft in den Firmenschriften von Werner & Pfleiderer oder in der DE-A 23 02 564 beschrieben.

Bevorzugt wird das bevorzugte Verfahren derart durchgeführt, dass man in das erste Gehäuse eines Reaktionsextruders mindestens einen thermoplastischen Polyester, z. B. Polybutylenterephthalat, dosiert und bei Temperaturen bevorzugt zwischen 180 °C bis 270 °C, bevorzugt 240 °C bis 270 °C aufschmilzt, in ein nachfolgendes Gehäuse ein Diol (c), z. B. Butandiol, und bevorzugt einen Umesterungskatalysator zugibt, bei Temperaturen zwischen 240 °C bis 280 °C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 °C bis 250 °C den Aufbau zu den bevorzugten thermoplastischen Polyurethanen durchführt.

Bevorzugt werden im Schritt (xx) mit Ausnahme der im Umsetzungsprodukt von (x) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguß mit Zykluszeiten kleiner 35s verarbeitbar sind. Auch in der Extrusion, z. B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d. h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (x), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (x) bezogen sind.

## Patentansprüche

1. Kabelummantelung auf der Basis von thermoplastischem Polyurethan basierend auf der Umsetzung von (a) Isocyanaten mit (b) Diolen, **dadurch gekennzeichnet dass**
- das Diol (b) basiert auf geradkettigen oder verzweigten Diolen (i) mit zwischen 16 und 45 Kohlenstoffatomen in einem ununterbrochenen Kohlenstoffgerüst, und das Diol (b) das Umsetzungsprodukt (ii) des Diols (i) mit Caprolacton und/oder Ethylenoxid darstellt,
oder
- das Diol (b) basiert auf Dimerdiol als Diol (i) und das Dimerdiol das Umsetzungsprodukt von dimeren Fettsäuren mit Adipinsäure sowie Diol ausgewählt aus Butan-1,4-diol, Hexan-1,6-diol und/oder Polyethylenglycol ist,
oder
- das Diol (b) basiert auf Dimerdiol als Diol (i), und das Dimerdiol das Umsetzungsprodukt der Dimerisierung von ungesättigten Fettalkoholen ist und der Fettalkohol zwischen 32 und 4.4 Kohlenstoffatome aufweist und/oder-das Produkt der Hydrierung von dimeren Fettsäuren und/oder deren Fettsäureestern ist und die Fettsäure zwischen 16 und 45 Kohlenstoffatome aufweist.

2. Kabelummantelung nach Anspruch 1, **dadurch gekennzeichnet, dass** das Umsetzungsprodukt (ii) ein Molekulargewicht zwischen 600 und 3000 g/mol aufweist.

3. Kabelummantelung nach Anspruch 1, **dadurch gekennzeichnet, dass** das thermoplastische Polyurethan basiert auf der Umsetzung von Isocyanat mit Diol (i) als Diol (b).

4. Kabelummantelung nach Anspruch 1, **dadurch gekennzeichnet, dass** der Gewichtsanteil des Diols (i) an dem Gesamtgewicht des thermoplastischen Polyurethans zwischen 2 und 25 Gew.-% beträgt.

5. Kabelummantelung nach Anspruch 1, **dadurch gekennzeichnet, dass** das thermoplastische Polyurethan basiert auf der Umsetzung von (a) Isocyanat mit einer gegenüber Isocyanaten reaktiven Komponente enthaltend Esterdiol mit einem Molekulargewicht zwischen 600 und 3000 g/mol auf Basis Adipinsäure sowie dem Diol (i) und/oder dem Umsetzungsprodukt (ii) als Diol (b).

6. Kabelummantelung nach Anspruch 1, **dadurch gekennzeichnet, dass** das thermoplastische Polyurethan eine Shore-Härte zwischen 70 A und 80 D, bevorzugt zwischen 95 A und 70 D aufweist.

7. Kabelummantelung nach Anspruch 1, **dadurch gekennzeichnet, dass** das thermoplastische Polyurethan Emulgatoren enthält.

8. Kabelummantelung nach Anspruch 1, **dadurch gekennzeichnet, dass** das thermoplastische Polyurethan nach 240 Stunden Lagerung in 1 %-iger wässriger NaCl Lösung einen spezifischen Durchgangswiderstand nach DIN IEC 60093 von mindestens 1*10⁺¹³ Ωcm aufweist.

9. Kabelummantelung nach Anspruch 1, **dadurch gekennzeichnet, dass** das thermoplastische Polyurethan im trockenen Zustand einen spezifischen Durchgangswiderstand nach DIN IEC 60093 von mindestens 1*10⁺¹⁴ Ωcm aufweist

10. Verfahren zur Ummantelung von Kabeln, insbesondere stromführenden Kabeln durch Extrusion von thermoplastischem Polyurethan, **dadurch gekennzeichnet, dass** man ein thermoplastisches Polyurethan gemäß einem der Ansprüche 1 bis 9 einsetzt.

11. Verfahren nach Anspruch 10, **dadurch gekennzeichnet, dass** man das thermoplastische Polyurethan im one-shot-Verfahren herstellt und anschließend zur Kabelummantelung verarbeitet.

12. Verfahren zur Herstellung von kabelummentelungen aus thermoplastichem Polyurethan gemäß einem der Ansprüche 1 bis 9 durch Umsetzung von (a) Isocyanaten mit (b) Diolen, **dadurch gekennzeichnet, dass** man das thermoplastische Polyurethan im one-shot-Verfahren herstellt.

13. Verfahren nach Anspruch 12, **dadurch gekennzeichnet, dass** das thermoplastische Polyurethan erhalten wird durch Umsetzung von (a) Isocyanaten mit dem Diol (i) und/oder dem Umsetzungsprodukt (ii) gemäß einem der Ansprüche 1 bis 8, (b1) Polyesterdiolen mit einem Schmelzpunkt größer 150°C, (b2) Polyetherdiolen und/oder Polyesterdiolen jeweils mit einem Schmelzpunkt kleiner 150°C und einem Molekulargewicht von 501 bis 8000 g/mol sowie gegebenenfalls (c) Diolen mit einem Molekulargewicht von 62 bis 500 g/mol.

## Claims

1. A cable sheathing on the basis of thermoplastic polyurethane based on the reaction of (a) isocyanates with (b) diols, wherein
- the diol (b) is based on straight-chain or branched diols (i) having from 16 to 45 carbon atoms in an uninterrupted carbon skeleton and the diol (b) is the reaction product (ii) of the diol (i) with caprolactone and/or ethylene oxide,
or
- the diol (b) is based on dimer diol as diol (i) and the dimer diol is the reaction product of dimeric fatty acids with adipic acid, or else a diol selected from 1,4-butanediol, 1,6-hexanediol, and/or polyethylene glycol,
or
- the diol (b) is based on dimer diol as diol (i), and the dimer diol is the reaction product of dimerization of unsaturated fatty alcohols and the fatty alcohol has from 32 to 44 carbon atoms and/or the product of hydrogenation of dimeric fatty acids and/or of hydrogenation of their fatty acid esters and the fatty acid has from 16 to 45 carbon atoms.

2. The cable sheathing according to claim 1, wherein the molar mass of the reaction product (ii) is from 600 to 3000 g/mol.

3. The cable sheathing according to claim 1, wherein the thermoplastic polyurethane is based on the reaction of isocyanate with diol (i) as diol (b).

4. The cable sheathing according to claim 1, wherein the proportion by weight of the diol (i), based on the total weight of the thermoplastic polyurethane, is from 2 to 25% by weight.

5. The cable sheathing according to claim 1, wherein the thermoplastic polyurethane is based on the reaction of (a) isocyanate with a component which is reactive toward isocyanates and which comprises esterdiol whose molar mass is from 600 to 3000 g/mol on the basis of adipic acid, and also with the diol (i) and/or the reaction product (ii), as diol (b).

6. The cable sheathing according to claim 1, wherein the Shore hardness of the thermoplastic polyurethane is from 70 A to 80 D, preferably from 95 A to 70 D.

7. The cable sheathing according to claim 1, wherein the thermoplastic polyurethane comprises emulsifiers.

8. The cable sheathing according to claim 1, wherein the volume resistivity to DIN IEC 60093 of the thermoplastic Polyurethane after 240 hours of storage in 1% strength aqueous NaCl solution is at least 1*10⁺¹³ Ωcm.

9. The cable sheathing according to claim 1, wherein the volume resistivity to DIN IEC 60093 of the thermoplastic polyurethane in the dry state is at least 1*10⁺¹⁴ Ωcm.

10. A process for the sheathing of cables, in particular of cables carrying current, via extrusion of thermoplastic polyurethane, which comprises using a thermoplastic polyurethane according to any of claims 1 to 9.

11. The process according to claim 10, wherein the thermoplastic polyurethane is produced in the one-shot process and then is processed to give the cable sheathing.

12. A process for production of cable sheathing made from thermoplastic polyurethane according to any of claims 1 to 9 via reaction of (a) isocyanates with (b) diols, which comprises producing the thermoplastic polyurethane in the one-shot process.

13. The process according to claim 12, wherein the thermoplastic polyurethane is obtained via reaction of (a) isocyanates with the diol (i) and/or with the reaction product (ii) according to any of claims 1 to 8, (b1) polyesterdiols whose melting point is greater than 150°C, (b2) polyetherdiols and/or polyesterdiols, each of whose melting points is smaller than 150°C, and each of whose molar masses is from 501 to 8000 g/mol, and also, if appropriate, (c) diols whose molar mass is from 62 to 500 g/mol.

## Revendications

1. Gainage de câbles à base de polyuréthane thermoplastique basé sur la réaction de (a) isocyanates avec (b) des diols, **caractérisé en ce que**
- le diol (b) est basé sur des diols (i) à chaîne droite ou ramifiée, comportant entre 16 et 45 atomes de carbone en un squelette carboné ininterrompu, et le diol (b) représente le produit de réaction (il) du diol (i) avec la caprolactone et/ou l'oxyde d'éthylène,
ou
- le diol (b) est basé sur un diol dimère en tant que diol (i) et le diol dimère est le produit de réaction d'acides gras dimères avec l'acide adipique ainsi qu'un diol choisi parmi le butane-1,4-diol, l'hexane-1,6-diol et/ou le polyéthylèneglycol,
ou
- le diol (b) est basé sur un diol dimère en tant que diol (i), et le diol dimère est le produit de réaction de la dimérisation d'alcools gras insaturés et l'alcool gras comporte entre 32 et 44 atomes de carbone
et/ou est le produit de l'hydrogénation d'acides gras dimères et/ou de leurs esters d'acides gras et l'acide gras comporte entre 16 et 45 atomes de carbone.

2. Gainage de câbles selon la revendication 1, **caractérisé en ce que** le produit de réaction (ii) présente une masse moléculaire comprise entre 600 et 3 000 g/mole.

3. Gainage de câbles selon la revendication 1, **caractérisé en ce que** le polyuréthane thermoplastique est basé sur la réaction d'un isocyanate avec un diol (i) en tant que diol (b).

4. Gainage de câbles selon la revendication 1, **caractérisé en ce que** la proportion pondérale du diol (i) par rapport au poids total du polyuréthane thermoplastique est comprise entre 2 et 25 % en poids.

5. Gainage de câbles selon la revendication 1, **caractérisé en ce que** le polyuréthane thermoplastique est basé sur la réaction de (a) un isocyanate avec un esterdiol contenant un composant réactif vis-à-vis d'isocyanates, ayant une masse moléculaire comprise entre 600 et 3 000 g/mole, à base d'acide adipique ainsi que du diol (i) et/ou du produit de réaction (ii) en tant que diol (b).

6. Gainage de câbles selon la revendication 1, **caractérisé en ce que** le polyuréthane thermoplastique présente une dureté Shore comprise entre 70 A et 80 D, de préférence entre 95 A ET 70 D.

7. Gainage de câbles selon la revendication 1, **caractérisé en ce que** le polyuréthane thermoplastique contient des émulsifiants.

8. Gainage de câbles selon la revendication 1, **caractérisé en ce qu'**après 240 heures de stockage dans une solution aqueuse de NaCl à 1 % le polyuréthane thermoplastique présente une résistance intérieure spécifique selon DIN IEC 60093 d'au moins 1*10⁺¹³ Ωcm.

9. Gainage de câbles selon la revendication 1, **caractérisé en ce qu'**à l'état sec le polyuréthane thermoplastique présente une résistance intérieure spécifique selon DIN IEC 60093 d'au moins 1*10⁺¹⁴ Ωcm.

10. Procédé pour le gainage de câbles, en particulier de câbles parcourus par du courant, par extrusion de polyuréthane thermoplastique, **caractérisé en ce qu'**on utilise un polyuréthane thermoplastique selon l'une quelconque des revendications 1 à 9.

11. Procédé selon la revendication 10, **caractérisé en ce qu'**on prépare le polyuréthane thermoplastique dans le procédé one-shot et ensuite on le transforme en le gainage de câbles.

12. Procédé pour la production de gainages de câbles à base de polyuréthane thermoplastique selon l'une quelconque des revendications 1 à 9, par mise en réaction de (a) isocyanates avec (b) des diols, **caractérisé en ce qu'**on prépare le polyuréthane thermoplastique dans le procédé one-shot.

13. Procédé selon la revendication 12, **caractérisé en ce que** le polyuréthane thermoplastique est obtenu par mise en réaction de (a) isocyanates avec le diol (i) et/ou le produit de réaction (ii) selon l'une quelconque des revendications 1 à 8, (b1) polyesterdiols ayant un point de fusion supérieur à 150 °C, (b2) de polyétherdiols et/ou polyesterdiols ayant chacun un point de fusion inférieur à 150 °C et une masse moléculaire de 501 à 8 000 g/mole ainsi qu'éventuellement (c) diols ayant une masse moléculaire de 62 à 500 g/mole.
